Europäisches Patentamt

(19) European Patent Office

Office européen des brevets

(11) Numéro de publication: **0 173 608**

**B1**

(12) **FASCICULE DE BREVET EUROPÉEN**

(45) Date de publication du fascicule du brevet:
27.12.89

(21) Numéro de dépôt: **85401520.3**

(22) Date de dépôt: **23.07.85**

(51) Int. Cl.⁴: **G 02 F 1/137**

(54) **Cellule à cristal liquide nématique faiblement dopé par un soluté chiral, et du type à biréfringence contrôlée électriquement.**

(30) Priorité: **26.07.84 FR 8411896**

(43) Date de publication de la demande:
**05.03.86 Bulletin 86/10**

(45) Mention de la délivrance du brevet:
**27.12.89 Bulletin 89/52**

(84) Etats contractants désignés:
**CH DE GB IT LI NL**

(56) Documents cité:
**GB-A-2 033 602**
**US-A-4 019 807**

**JOURNAL OF APPLIED PHYSICS, vol. 53, no. 12, décembre 1982, pages 8599-8606, American Institute of Physics, New York, US; W.R. HEFFNER et al.: "Switching characteristics of a bistable cholesteric twist cell"**
**International Handbook of Liquid Cristals Displays, 1975-76, Pages 22-24, Fig. F5-7 and F5-8;**

(73) Titulaire: **COMMISSARIAT A L'ENERGIE ATOMIQUE, 31/33, rue de la Fédération, F-75015 Paris (FR)**

(72) Inventeur: **Clerc, Jean- Frédéric, 10, Allée du Pré Blanc, F-38240 Meylan (FR)**
Inventeur: **Rabas, Laurence, 270, Avenue A. Croizat, F-38400 Saint Martin D'Heres (FR)**

(74) Mandataire: **Mongrédien, André, c/o BREVATOME 25, rue de Ponthieu, F-75008 Paris (FR)**

EP 0 173 608 B1

## Description

La présente invention concerne une cellule à cristal liquide nématique d'anisotropie diélectrique négative, faiblement dopé par un soluté chiral, et du type à biréfringence contrôlée électriquement. Elle s'applique notamment à la réalisation de dispositifs d'affichage d'images fixes ou animées.

On connaît des cellules à cristal liquide nématique pur, d'anisotropie diélectrique négative, utilisant l'effet de biréfingence contrôlée électriquement International Handbook of Liquid Crystal Diplays 1975 - 1976, Ovum Ltd., Londres, Angleterre. Cette cellule connue utilise des polariseurs rectilignes, mais pour fonctionner convenablement, de telles cellules présentent l'inconvénient de nécessiter des polariseurs circulaires dont le coût est élevé.

On connaît également des cellules à cristal liquide, comprenant une couche de cristal liquide nématique additionné d'un colorant dichroïque et fortement dopé par un soluté chiral, de telle sorte que le pas de torsion du cristal liquide de type cholestérique résultant est de l'ordre de l'épaisseur de la couche de cristal liquide. De telles cellules utilisent, pour fonctionner, l'absorption sélective du colorant dichroïque en lumière naturelle non polarisée et les états "blanc" et "noir" desdites cellules correspondent respectivement à des basculements très différents des molécules dans ces cellules: au centre de celles-ci, le basculement est de l'ordre de zéro degré pour l'état blanc et de l'ordre de 70 à 90° pour l'état noir.

La présente invention a pour but de remédier à l'inconvénient mentionné plus haut et, dans une réalisation particulière, de permettre en outre d'obtenir des dispositifs d'affichage dont le taux de multiplexage et donc le nombre de lignes sont supérieurs à ceux des afficheurs connus, utilisant l'effet de biréfringence contrôlée électriquement (pour lesquels le nombre de lignes ne dépasse guère 250).

De façon précise, la présente invention a pour objet une cellule à cristal liquide nématique d'anisotropie diélectrique négative, du type à biréfringence contrôlée électriquement, comprenant un ensemble comportant une couche du cristal liquide, deux électrodes qui sont situées de part et d'autre de la couche et dont l'une au moins est transparente, la cellule étant destinée à être exposée à une lumière du côté de cette électrode transparente, et au moins un moyen de polarisation de la lumière, situé du côté de l'incidence de cette dernière, caractérisée en ce que le cristal liquide est faiblement dopé par un soluté chiral de telle façon que le pas de torsion du matériau constituant le cristal liquide de type cholestérique résultant soit supérieur à environ deux fois l'épaisseur de la couche et inférieur à environ huit fois cette épaisseur.

La présente invention permet ainsi d'utiliser au choix, pour la polarisation de la lumière, soit un ou plusieurs polariseurs circulaires soit un ou plusieurs polariseurs rectilignes, ces derniers étant beaucoup moins coûteux que les polariseurs circulaires.

Selon une réalisation particulière de l'invention, les deux électrodes sont transparentes et la cellule comprend deux polariseurs rectilignes croisés, situés de part et d'autre des électrodes.

L'un des polariseurs peut être disposé de façon que son absorption maximale s'effectue perpendiculairement à la direction d'alignement des molécules de cristal liquide en l'absence de tension électrique entre les électrodes et parallèlement au plan défini par les directions d'alignement prises par les molécules de cristal liquide situées au centre de la couche, respectivement en l'absence de tension électrique entre les électrodes et en présence d'une tension électrique entre ces électrodes, supérieure à la tension de seuil de la cellule.

Selon une autre réalisation particulière, le moyen de polarisation est un polariseur rectiligne et l'une des électrodes est optiquement réflectrice et située à l'opposé de ce polariseur par rapport à la couche de cristal liquide.

Ledit polariseur peut être disposé de façon que son absorption maximale s'effectue perpendiculairement à la direction d'alignement des molécules de cristal liquide en l'absence de tension électrique entre les électrodes et parallèlement au plan défini par les directions d'alignement prises par les molécules de cristal liquide situées au centre de la couche, respectivement en l'absence de tension électrique entre les électrodes et en présence d'une tension électrique entre ces électrodes, supérieure à la tension de seuil de la cellule.

Enfin, selon une autre réalisation particulière, le cristal liquide nématique est choisi de façon que ses constantes élastiques d'éventail $K_{11}$, de torsion $K_{22}$ et de flexion $K_{33}$ vérifient la relation suivante:

$$7K_{33} > 6K_{22} + 3K_{11}$$

On améliore ainsi, comme on le verra par la suite, la sélectivité à l'adressage électrique et donc le taux de multiplexage, par rapport à un nématique pur.

La présente invention sera mieux comprise à la lecture de la description qui suit, d'exemples de réalisation donnés à titre purement indicatif et nullement limitatif, en référence aux dessins annexés sur lesquels:

- la figure 1 est une vue éclatée schématique d'une cellule à cristal liquide nématique dopé, utilisant l'effet de biréfringence contrôlée électriquement, selon l'invention,
- les figures 2A et 2B représentent les orientations des molécules situées au centre de la couche de cristal liquide d'une cellule à nématique pur, respectivement dans le cas où aucune tension n'est appliquée entre les électrodes de la cellule et dans le cas où une tension supérieure à la tension de seuil de cette cellule est appliquée entre ces électrodes,
- les figures 3A à 3E montrent les orientations des molécules d'une couche de cristal liquide d'une cellule selon l'invention, à différents niveaux de cet te couche, lorsqu'une tension électrique supérieure à la tension de seuil de cette cellule est appliquée entre les électrodes de celle-ci, et

- les figures 4A à 4E montrent ces différentes orientations en vue de dessus.

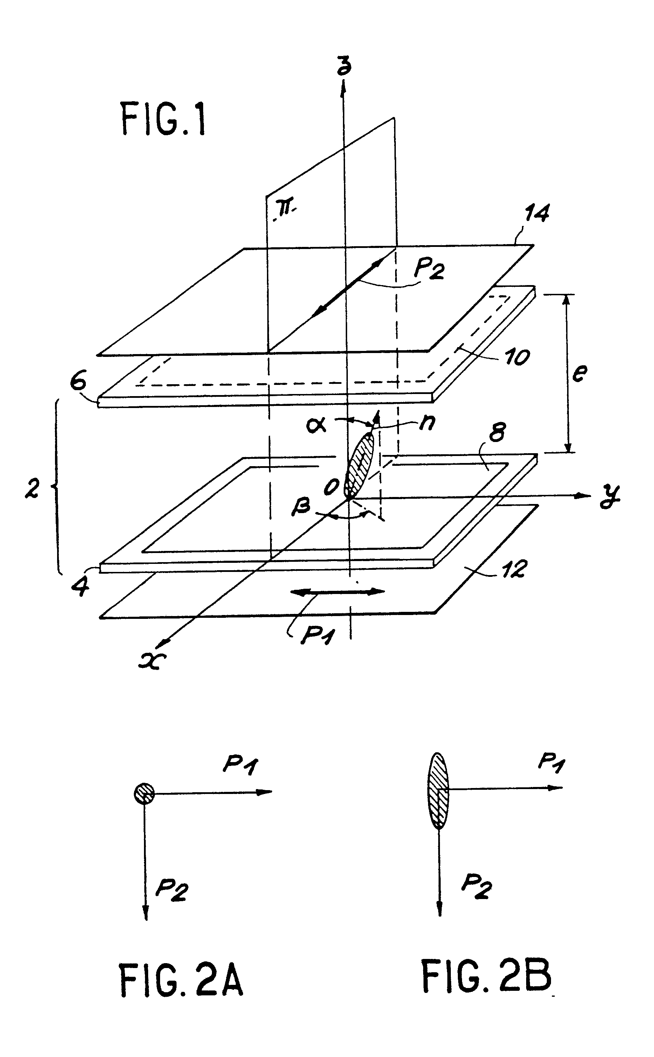

Sur la figure 1, on a représenté schématiquement, en vue éclatée, une cellule à cristal liquide selon l'invention, comprenant une couche 2 de cristal liquide d'épaisseur e, comprise entre une plaque inférieure 4 et une plaque supérieure 6 parallèles et transparentes, par exemple en verre. Des électrodes 8 et 10 sont respectivement disposées sur les faces des plaques 4 et 6, qui sont directement en regard l'une de l'autre.

Le cristal liquide est du type nématique, faiblement dopé par un soluté chiral, de telle façon que le pas de torsion $p_0$ du cristal liquide de type cholestérique résultant vérifie la double inégalité suivante:

$$2e \leq p_0 \leq 8e \tag{1}$$

De plus, la cellule est du type à biréfringence contrôlée électriquement, c'est-à-dire qu'en l'absence de tension électrique entre les électrodes, les molécules de cristal liquide sont sensiblement perpendiculaires aux plaques 4 et 6 et donc sensiblement parallèles à un axe Oz perpendiculaire à ces plaques et orienté de la plaque inférieure 4 à la plaque supérieure 6, le point 0 étant choisi sur la plaque inférieure de telle sorte que ce point corresponde à une épaisseur nulle de cristal liquide.

Lorsqu'une tension électrique supérieure à une tension de seuil qui sera considérée par la suite, est appliquée entre les électrodes, les axes n des molécules de cristal liquide basculent par rapport à cet axe Oz en formant avec ce dernier des angles $\alpha$ dont la valeur dépend de la profondeur à laquelle se trouvent les molécules dans la couche de cristal liquide. Les molécules situées à la cote e/2 comptée sur l'axe Oz, basculent d'un angle $\alpha_M$. Il est ainsi possible de définir un trièdre trirectangle direct Oxyz dont l'axe Ox est parallèle au plan défini par l'axe Oz et par la direction prise par les molécules qui sont situées à la profondeur e/2 et qui ont basculé sous l'effet de la tension électrique supérieure à la tension de seuil.

Sous l'effet de cette tension électrique, les projections sur le plan Oxy des axes n des molécules de la couche de cristal liquide forment également avec l'axe Ox des angles $\beta$ qui dépendent de la profondeur à laquelle se situent les molécules dans la couche de cristal liquide.

On va maintenant considérer la question de l'amélioration du taux de multiplexage selon l'invention. C'est l'angle de basculement des molécules sous l'effet d'une tension électrique appliquée entre les électrodes, qui détermine la transmission des niveaux blanc (tension supérieure à la tension de seuil) ou noir (tension inférieure à la tension de seuil). Cet angle reste inférieur à 30° même au niveau de transmission maximale.

Dans le cas d'un cristal liquide nématique pur, l'angle $\beta$ est nul pour toutes les molécules de la couche de cristal liquide et l'angle $\alpha_M$ au centre de la couche est donné par la formule suivante, valide pour des angles a inférieurs à 30°:

$$\alpha^2{}_M = (V^2{}_a - V^2{}_{S0})\, (V^2{}_a(2/3 - E_a/E_{par}) - H_{31} V^2{}_{S0})^{-1)} \tag{2}$$

Dans cette formule, l'angle $\alpha_M$ est exprimé en radians, $V_a$ représente la tension appliquée entre les électrodes, $V_{S0}$ représente la tension de seuil de l'effet électrooptique dans la cellule à cristal liquide nématique pur, $E_a$ représente l'anisotropie diélectrique du cristal liquide nématique pur, supposée négative dans la présente invention, et égale à la différence entre la valeur $E_{par}$ de la constante diélectrique d'une molécule, comptée parallèlement à l'axe de celle-ci, et la valeur $E_{perp}$ de cette constante, comptée perpendiculairement à cet axe, et $H_{31}$ est égal à $(K_{33}-K_{11})/K_{33}$, $K_{33}$ étant la constante élastique de flexion du cristal liquide nématique pur et $K_{11}$ étant la constante élastique d'éventail de ce cristal liquide.

Dans les dispositifs d'affichage connus à cristaux liquides nématiques, on cherche, pour améliorer le taux de multiplexage, à utiliser des cristaux liquides nématiques présentant le rapport $H_{31}$ le plus élevé possible. Les dispositifs connus utilisent des cristaux liquides nématiques dont le rapport $H_{31}$ est de l'ordre de 0,21 et la tension de seuil $V_{S0}$ de l'ordre de 4,5 volts.

La relation donnant l'angle $\alpha_M$ est modifiée de la façon suivante lorsqu'un soluté chiral est ajouté au cristal liquide nématique:

$$\alpha^2{}_M = (V^2{}_A - V^2{}_S)\, (V^2{}_a(2/3 - E_a/E_{par}) - H^+{}_{31} V^2{}_S)^{-1)} \tag{3}$$

Dans cette relation, qui n'est encore valable que pour des angles $\alpha_M$ inférieurs à 30° (ce qui est le cas dans l'invention pour laquelle $\alpha_M$ est très faible et peut être de l'ordre de 10°), $V_S$ représente la tension de seuil correspondant au mélange nématique plus soluté chiral, et vaut:

$$V_S = (1-X)^{1/2}\, V_{S0} \tag{4}$$

avec:

$$X = 4(K_{22}/K_{33})^2 (e/p_0)^2 \tag{5}$$

où $K_{22}$ représente la constante élastique de torsion du cristal liquide nématique pur.

La quantité $H^+{}_{31}$ est donnée par la formule suivante:

3

$$H^+_3 = H_{31} + X(1-X)^{-1}(2H_{32} + H_{31} - 2/3) \tag{6}$$

dans laquelle $H_{32}$ est égal à $(K_{33} - K_{22})/K_{33}$

Ilest clair que si la condition

$$7K_{33} > 6K_{22} + 3K_{11} \tag{7}$$

est réalisée, la quantité $H^+_{31}$ est supérieure à la quantité $H_{31}$. Donc, le cristal liquide nématique dopé par le soluté chiral présente une meilleure sélectivité à l'adressage électrique que le cristal liquide nématique pur. En conséquence, le taux de multiplexage est augmenté par adjonction d'un soluté chiral au cristal liquide nématique.

Dans le même temps, on remarque que la tension de seuil $V_S$ est inférieure à la tension de seuil $V_{SO}$, ce qui correspond à une diminution des tensions d'adressage.

Un dopage trop fort conduit cependant à une perte de rendement lumineux. Un bon compromis entre le rendement lumineux et le taux de multiplexage est obtenu en réalisant le dopage de telle façon que la relation (1) indiquée plus haut soit satisfaite, relation qui implique effectivement une limitation du dopage puisque l'inverse du pas $p_0$ est proportionnel au taux du soluté chiral dans le mélange réalisé.

A titre indicatif et non limitatif, le cristal liquide nématique est un mélange de bases de SHIFF qui vérifie l'inégalité (7), avec: un pas $p_0$ bien entendu infini (aucun dopage), un coefficient $H^+_{31}$ de 0,21, un coefficient $X$ nul et une tension de seuil $V_S$ de 4,5 V et le soluté chiral est le produit commercialisé par la Société MERCK sous la référence CB15. Pour diverses concentrations de ce produit (correspondant à divers pas $p_0$), on obtient le tableau suivant

**Tableau I**

| $p_0$ | $H_{31}$ | $X$ | $V_S$ |
|---|---|---|---|
| infini | 0,21 | 0 | 4,50 V |
| 40 µm | 0,22 | 0,014 | 4,46 V |
| 20 µm | 0,245 | 0,055 | 4,37 V |
| 10 µm | 0,38 | 0,220 | 4    V |

Le passage de $H^+_{31}$ d'une valeur de 0,21 à une valeur de 0,38 permet une augmentation du taux de multiplexage de l'ordre de 50 %.

L'invention peut ainsi permettre de réaliser des dispositifs d'affichage d'images fixes ou animées pouvant comporter jusqu'à 400 lignes, voire plus.

On notera que la cellule de l'invention n'est pas comparable aux cellules connues déjà mentionnées, qui comportent des colorants dichroïques: la cellule de l'invention utilise un effet optique qui fait appel à la biréfringence d'un cristal liquide sans colorant et elle comporte au moins un moyen de polarisation de la lumière de plus, le taux de soluté chiral est beaucoup plus faible que dans lesdites cellules connues; en outre, les états blanc et noir, dans la cellule de l'invention, correspondent tous deux à de très faibles basculements des molécules (environ 10 pour l'état noir et 10° pour l'état blanc, au centre de la couche de cristal liquide); ces faibles basculements permettent une grande sélectivité de l'effet électro-optique à la tension appliquée entre les électrodes, l'affichage étant d'ailleurs acquis pour un rapport signal sur bruit voisin de 1,05.

Les formules (2) et (3) données plus haut ne seraient d'ailleurs pas applicables aux cellules à colorant dichroïque pour lesquelles les basculements sous tension sont très importants.

Revenant à la figure 1, la cellule décrite plus haut en référence à cette figure, a ses électrodes transparentes et comprend en outre un premier polariseur rectiligne 12 et un second polariseur rectiligne 14 qui encadrent l'ensemble constitué par la couche 2 et par les deux plaques 4 et 6. Le premier polariseur 12 est du côté de la plaque inférieure 4 et a une direction d'absorption maximale $P_1$ parallèle à l'axe Oy. Le second polariseur rectiligne 14 est du côté de la plaque supérieure 6 et a une direction d'absorption maximale $P_2$ parallèle à l'axe Ox. La cellule est éclairée par une lumière qui tombe sur le premier polariseur 12 et cette cellule est observée à travers le second polariseur 14, le plan d'observation π étant parallèle au plan Oxz.

Pour une cellule de même structure mais dont la couche est constituée d'un cristal liquide nématique pur, les angles des molécules étant alors constamment nuls, la direction de basculement majoritaire des molécules de cette couche, correspondant à l'application d'une tension électrique entre les électrodes, supérieure à la tension de seuil de la cellule, se projette sur le plan Oxy suivant une direction parallèle à $P_2$. Il n'y a donc pas d'effet de biréfringence, que la cellule soit au repos (figure 2A), les molécules étant toutes sensiblement orientées suivant l'axe Oz ou que la cellule soit excitée (figure 2B), les molécules étant alors basculées parallèlement au plan π.

Pour une cellule à cristal liquide nématique pur, utilisant l'effet de biréfringence contrôlée électriquement, il y a donc une incompatibilité entre le basculement parallèlement au plan d'observation π (ce qui est nécessaire pour avoir une bonne symétrie de l'angle de vue) et la disposition des polariseurs rectilignes qui ouvre l'angle de vue dans le plan d'observation $\pi$. On utilise alors en général des polariseurs circulaires pour remédier à l'incompatibilité ci-dessus certes, on peut également utiliser, comme l'enseigne le "International Handbook of Liquid Crystal Displays 1975 - 76" Ovum Ltd., Londres Angleterre, des polariseurs rectilignes croisés, mais la direction d'absorption maximale de chacun d'eux est alors à 45° du plan d'observation.

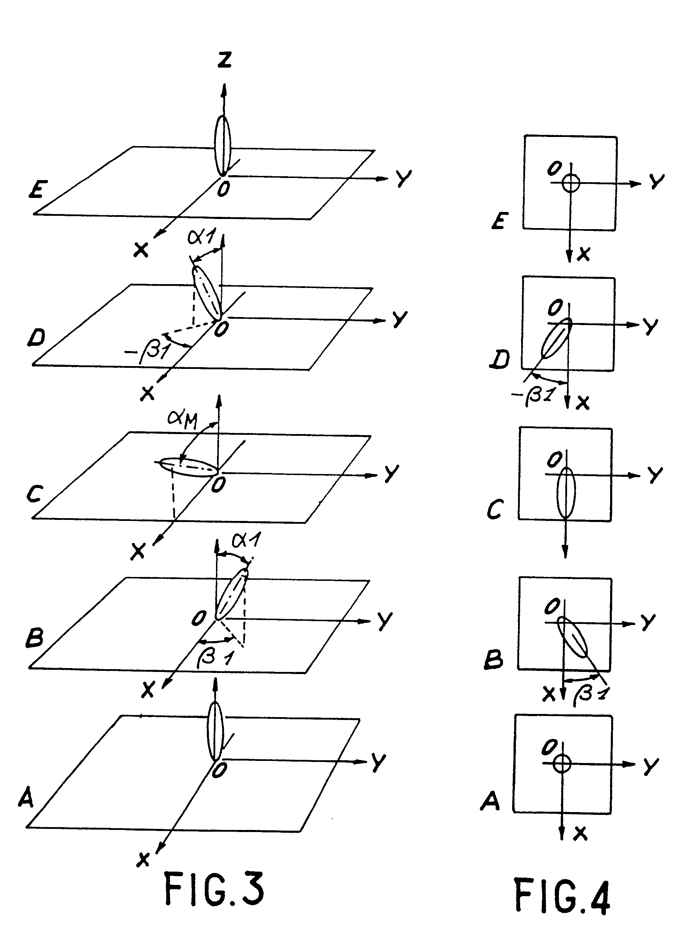

Selon l'invention, l'addition du soluté chiral au nématique permet de faire tourner la direction de basculement n dans l'épaisseur de la couche de cristal liquide. Ceci est représenté en perspective sur les figures 3A à 3E et en vue de dessus sur les figures 4A à 4E qui sont respectivement les homologues des figures 3A à 3E, celles-ci correspondant respectivement aux profondeurs décroissantes $z = 0$, $z = \Delta z$, $z = e/2$, $z = e - \Delta z$ et $z = e$, comptées sur l'axe Oz. Les valeurs de $\alpha$ et $\beta$ correspondant à ces profondeurs sont données dans le tableau suivant, dans lequel $\beta_1$ est une valeur positive:

**Tableau II**

| z | 0 | $\Delta z$ | e/2 | e-$\Delta z$ | e |
|---|---|---|---|---|---|
| $\alpha$ | 0 | $\alpha_1$ | $\alpha_M$ | $\alpha_1$ | 0 |
| $\beta$ | - | $\beta_1$ | 0 | -$\beta_1$ | - |

L'angle $\alpha$ passe par son maximum $\alpha_M$ pour $z = e/2$.

Un dopage conduisant à un pas $p_0$ satisfaisant à la double inégalité (1) permet d'éviter les régimes "guide d'onde" (utilisés pour les cellules du type à nématique en hélice mais gênants pour les cellules du type à biréfringence contrôlée électriquement), du fait des faibles angles de basculement obtenus dans l'invention, et de conférer une sensibilité optique au basculement, même entre deux polariseurs rectilignes disposés comme on l'a indiqué plus haut en référence à la figure 1 et conduisant à un large angle de vue dans le plan d'observation $\pi$.

On ne sortirait pas du cadre de l'invention en supprimant le polariseur 12 et en remplaçant l'électrode transparente 8 par une électrode optiquement réflectrice, la cellule étant a lors éclairée par une lumière tombant sur le second polariseur 14.

## Revendications

1. Cellule à cristal liquide nématique d'anisotropie diélectrique négative, du type à biréfringence contrôlée électriquement, comprenant un ensemble comportant une couche (2) du cristal liquide, deux électrodes (8, 10) qui sont situées de part et d'autre de la couche et dont l'une au moins est transparente, la cellule étant destinée à être exposée à une lumière du côté de cette électrode transparente, et au moins un moyen (14) de polarisation de la lumière, situé du côté de l'incidence de cette dernière, caractérisée en ce que le cristal liquide est faiblement dopé par un soluté chiral de telle façon que le pas de torsion du matériau constituant le cristal liquide de type cholestérique résultant soit supérieur à environ deux fois l'épaisseur de la couche (2) et inférieur à environ huit fois cette épaisseur.

2. Cellule selon la revendication 1, caractérisée en ce que les deux électrodes (8, 10) sont transparentes et en ce que la cellule comprend deux polariseurs rectilignes croisés (12, 14), situés de part et d'autre des électrodes.

3. Cellule selon la revendication 2, caractérisée en ce que l'un (14) des polariseurs est disposé de façon que son absorption maximale s'effectue perpendiculairement à la direction d'alignement des molécules de cristal liquide en l'absence de tension électrique entre les électrodes (8, 10) et parallèlement au plan défini par les directions d'alignement prises par les molécules de cristal liquide situées au centre de la couche (2), respectivement en l'absence de tension électrique entre les électrodes (8, 10) et en présence d'une tension électrique entre ces électrodes (8, 10), supérieure à la tension de seuil de la cellule.

4. Cellule selon la revendication 1, caractérisée en ce que le moyen de polarisation (14) est un polariseur rectiligne et en ce que l'une des électrodes (8) est optiquement réflectrice et située à l'opposé de ce polariseur (14) par rapport à la couche (2) de cristal liquide.

5. Cellule selon la revendication 4, caractérisée en ce que le polariseur (14) est disposé de façon que son absorption maximale s'effectue perpendiculairement à la direction d'alignement des molécules de cristal liquide en l'absence de tension électrique entre les électrodes (8, 10) et parallèlement au plan défini par les directions d'alignement prises par les molécules de cristal liquide situées au centre de la couche (2), respectivement en l'absence de tension électrique entre les électrodes (8, 10) et en présence d'une tension électrique entre ces électrodes (8, 10), supérieure à la tension de seuil de la cellule.

6. Cellule selon l'une quelconque des revendications 1 à 5, caractérisée en ce que le cristal liquide nématique est choisi de façon que ses constantes élastiques d'éventail $K_{11}$, de torsion $K_{22}$ et de flexion $K_{33}$ vérifient la relation suivante:

5

$7K_{33} > 6K_{22} + 3K_{11}$

## Patentansprüche

1. Nematische Flüssigkristallzelle mit negativer dielektrischer Anisotropie, von doppelbrechendem elektrisch steuerbaren Typ, mit einer Anordnung, welche eine Flüssigkristallschicht (2), zwei Elektroden (8, 10), die einerseits und andererseits der Schicht angeordnet sind und von denen wenigstens eine durchsichtig ist, wobei die Zelle dafür bestimmt ist, einem Licht auf der Seite dieser durchsichtigen Elektrode ausgesetzt zu werden, und wenigstens eine Einrichtung (14) zur Polarisation des Lichtes aufweist, die auf der Seite des Einfalls des letzteren angeordnet ist, *dadurch gekennzeichnet*, daß das Flüssigkristall von einem chiralen gelösten Stoff schwach gedopt ist, derart, daß der Drallschritt des Materiales, das den Flüssigkristall vom resultierenden cholesterischen Typ bildet, größer ist als ungefähr zweimal die Dicke der Schicht (2) und kleiner ist als ungefähr achtmal diese Dicke.

2. Zelle nach Anspruch 1, *dadurch gekennzeichnet*, daß die beiden Elektroden (8, 10) durchsichtig sind, und daß die Zelle zwei gekreuzte geradlinige Polarisatoren (12, 14) aufweist, die einerseits und andererseits der Elektroden angeordnet sind.

3. Zelle nach Anspruch 2, *dadurch gekennzeichnet*, daß einer (14) der Polarisatoren derart angeordnet ist, daß sich seine maximale Absorption senkrecht zur Ausrichtungsrichtung der Flüssigkristallmoleküle unter Abwesenheit von elektrischer Spannung zwischen den Elektroden (8, 10) und parallel zur Ebene vollzieht, die durch die Ausrichtrichtungen definiert ist, die von den Flüssigkristallmolekülen eingenommen werden, die sich im Zentrum der Schicht (2) befinden, unter Abwesenheit von elektrischer Spannung zwischen den Elektroden (8, 10) bzw. unter Vorhandensein einer elektrischen Spannung zwischen den Elektroden (8, 10), die größer als die Schwellenspannung der Zelle ist.

4. Zelle nach Anspruch 1, *dadurch gekennzeichnet*, daß die Polarisationseinrichtung (14) ein geradliniger Polarisator ist, und daß eine der Elektroden (8) optisch reflektierend ist und gegenüber dem Polarisator (14) bezüglich der Schicht (2) des Flüssigkristalls angeordnet ist.

5. Zelle nach Anspruch 4, *dadurch gekennzeichnet*, daß der Polarisator (14) derart angeordnet ist, daß sich seine maximale Absorption senkrecht zur Ausrichtrichtung der Flüssigkristallmoleküle unter Abwesenheit von elektrischer Spannung zwischen den Elektroden (8, 10) und parallel zur Ebene, die von den Ausrichtrichtungen definiert wird, vollzieht, die durch die Flüssigkristallmoleküle eingenommen werden, die im Zentrum der Schicht (2) angeordnet sind, unter Abwesenheit von elektrischer Spannung zwischen den Elektroden (8, 10) bzw. unter Vorhandensein einer elektrischen Spannung zwischen den Elektroden (8, 10), die größer ist als die Schwellenspannung der Zelle.

6. Zelle nach einem der Ansprüche 1 bis 5, *dadurch gekennzeichnet*, daß das nematische Flüssigkristall derart gewählt wird, daß seine Konstanten des Elastizitätsbereiches $K_{11}$, des Dralls bzw. der Torsion $K_{22}$ und der Durchfederung $K_{33}$ die folgende Gleichung erfüllen:

$7K_{33} > 6K_{22} + 3K_{11}$

## Claims

1. Nematic liquid crystal cell with negative dielectric anisotropy of the type having electrically controlled birefringence, incorporating an assembly having a liquid crystal coating (2), two electrodes (8, 10) on either side of the coating and whereof at least one is transparent, the cell being intended for exposure to light from the side of said transparent electrode, and at least one light polarizing means (14) on the side of the incidence of the latter, characterized in that the liquid crystal is weakly doped by a chiral solute in such a way that the twist of the material constituting the cholisteric liquid crystal resulting therefrom is greater than approximately two times the thickness of the coating (2) and less than approximately 8 times said thickness.

2. Cell according to claim 1, characterized in that the two electrodes (8, 10) are transparent and in that the cell comprises two crossed linear polarizers (12, 14) on either side of the electrodes.

3. Cell according to claim 2, characterized in that one (14) of the polarizers is positioned in such a way that its maximum absorption is perpendicular to the alignment direction of the liquid crystal molecules in the absence of a voltage between the electrodes (8, 10) and parallel to the plane defined by the alignment directions taken by the liquid crystal molecules in the centre of the coating (2), respectively in the absence of a voltage between electrodes (8, 10) and in the presence of a voltage between said electrodes (8, 10) above the threshold voltage of the cell.

4. Cell according to claim 1, characterized in that the polarizing means (14) is a linear polarizer and in that one of the electrodes (8) is optically reflecting and positioned opposite to polarizer (14) with respect to the liquid crystal coating (2).

5. Cell according to claim 4, characterized in that the polarizer (14) is positioned in such a way that its maximum absorption is perpendicular to the alignment direction of the liquid crystal molecules in the absence of a voltage between the electrodes (8, 10) and parallel to the plane defined by the alignment directions taken by the liquid crystal molecules in the centre of coating (2), respectively in the absence of a voltage between electrodes (8, 10) and in the presence of a voltage between said electrodes (8, 10) above the threshold voltage of said cell.

6. Cell according to one of the claims 1 to 5, characterized in that the nematic liquid crystal is chosen in such a way that its fanning $K_{11}$, twist $K_{22}$ and bending $K_{33}$ elastic constants prove the following relation:

$$7K_{33} > 6K_{22} + 3K_{11}$$

FIG.1

π

P2

14

10

6

e

α n

8

2

0

y

β

4

12

x

P1

P1

P2

FIG. 2A

P1

P2

FIG. 2B

FIG.3

FIG.4